# NOUVEAU FASCICULE DE BREVET EUROPEEN

(11) **EP 0 557 222 B2**
(45) Date de publication et mention de la décision concernant l'opposition: **21.08.2002**
(45) Mention de la délivrance du brevet: 16.07.1997
(21) Numéro de dépôt: 93420077.5
(22) Date de dépôt: 17.02.1993
(51) Int. Cl.: C08L 77/00, C08K 3/00

(54) **Compositions à base de polyamide ignifugé**
Zusammensetzungen auf Basis von flammfesten Polyamiden
Compositions based on flame-resistant polyamide

(30) Priorité: 18.02.1992 FR 9202067
(43) Date de publication de la demande: 25.08.1993
(73) Titulaire: RHODIA ENGINEERING PLASTICS S.A., 69192 Saint-Fons (FR)
(72) Inventeur: Bonin, Yves, F-69530 Brignais (FR); Leblanc, Jack, F-69230 St-Genis Laval (FR)
(74) Mandataire: Esson, Jean-Pierre

(56) Documents cités:
- EP-A- 0 092 776
- EP-A- 0 092 776
- EP-A- 0 093 903
- EP-A- 0 195 301
- EP-A- 0 278 559
- EP-A- 0 312 471
- DE-A- 2 754 491
- DE-A- 2 754 515
- DE-A- 3 905 038

## Description

La présente invention a pour objet de nouvelles compositions à base de polyamide ignifugé au moyen de phosphore rouge destinées notamment à la fabrication d'articles pour les industries électrique et électronique. Plus particulièrement, elle concerne des compositions conduisant à des articles ignifugés présentant un bon compromis de propriétés en particulier en matière de résistance au feu, de résilience, de résistance au cheminement de l'arc et d'aspect de surface, et un faible caractère corrosif.

On sait que l'adjonction de phosphore rouge dans des compositions à base de polyamide permet d'atteindre un degré élevé d'ignifugation.

Dans le brevet américain n° 3.883.475, on a décrit des compositions à base de polyamide ignifugé dans lesquelles on a cherché à inhiber le dégagement de phosphine très toxique, qui se forme à la suite d'une réaction de dismutation du phosphore rouge sous l'action des traces d'eau présentes dans le polymère et de la chaleur élevée nécessaire à sa transformation, par addition dans la composition d'un composé métallique consistant avantageusement dans l'oxyde cuivrique.

Dans le brevet français n° 2.367.100, on a proposé une amélioration consistant à faire appel à de l'oxyde de cadmium à la place du CuO ; l'oxyde de cadmium en plus de son efficacité (au moins égale à celle de CuO) pour inhiber le dégagement de phosphine, conduit à des articles présentant une résistance au cheminement de l'arc (au sens de la norme NF C 26220) particulièrement élevée, égale ou supérieure à 400 volts dans le cas de compositions non chargées et à 375 volts dans le cas de compositions chargées avec plus de 25 % en poids de fibres de verre.

Dans les brevets français n° 2.553.783 et 2.621.594, on a proposé un produit de remplacement de l'oxyde de cadmium (qui présente une certaine toxicité) consistant dans un composé à base de lanthanide. Avec cet adjuvant, les compositions à base de polyamide ignifugé obtenues conduisent à des articles présentant un compromis de propriétés en particulier en matière d'ignifugation, de résilience et de résistance au cheminement de l'arc qui est meilleur que celui lié à l'emploi de l'oxyde de cadmium.

Toutefois, ces compositions ignifugés par du phosphore rouge comprenant ou non d'autres composants pour inhiber le dégagement de phosphine, présentent une certaine agressivité vis-à-vis des pièces à base de matériau métallique qui sont en contact avec le polymère ou insérées, par exemple par moulage, dans un article moulé avec ces compositions. Ce phénomène est notamment observé avec les pièces moulées utilisées dans le domaine électrique ou électronique pour supporter des contacts métalliques, par exemple des contacts en cuivre.

Un des buts de la présente invention est notamment de remédier à ces inconvénients en proposant une composition à base de polyamide ignifugé présentant de bonnes propriétés mécaniques, ainsi qu'une bonne résistance au cheminement de l'arc électrique et une faible agressivité vis-à-vis des métaux.

A cet effet, l'invention propose une composition à base de polyamide contenant à titre d'ignifugeant du phosphore rouge, caractérisée en ce qu'elle comprend un oxyde de zinc et un sel de zinc choisi dans le groupe comprenant les sels oxygénés de zinc et les sulfures.
Ces compositions ne comprennent pas de composés de lanthanides et du talc.

L'invention propose également une composition à base de polyamide contenant à titre d'ignifugeant du phosphore rouge, caractérisée en ce qu'elle comprend un additif constitué par du borate de zinc.

Selon un mode de réalisation préféré de l'invention, la teneur en composés de zinc, exprimée en poids de zinc par rapport au poids de phosphore rouge est compris entre 10 % environ et 100 % environ. De préférence cette teneur est comprise entre 20 % et 80 %, avantageusement entre 40 et 80 %.

La composition polyamide peut comprendre une charge telle qu'une charge minérale.

A titre d'exemple, on peut citer comme charge minérale les fibres minérales telles que les fibres de verre, d'amiante, des microbilles de verre, de la silice, des micas, du kaolin, des bentonites ou un mélange de ceux-ci.

Selon une autre caractéristique préférée de l'invention, les composés de zinc sont un mélange borate de zinc, et d'oxyde de zinc. Ces composés présentent notamment l'avantage, quand ils sont utilisés dans une composition polyamide chargée avec des fibres de verre, de ne pas affecter sensiblement les propriétés mécaniques de la composition. Ainsi, la résistance au choc de la composition polyamide chargée avec des fibres de verre n'est pas sensiblement affectée par l'incorporation de borate de zinc.

Selon un mode de réalisation préféré de l'invention, la composition comprend un mélange de borate de zinc et d'oxyde de zinc selon des concentrations pondérales exprimées en Zn métallique par rapport au phosphore comprises entre 15 et 60 % pour l'oxyde de zinc et 15 et 40 % pour le borate de zinc. Bien entendu, la concentration totale en composés du zinc est comprise dans les intervalles donnés ci-dessus.

Les polyamides à ignifuger convenables pour la présente invention comprennent notamment : les polyamides obtenus par polycondensation de diacides carboxyliques aliphatiques saturés ayant de 6 à 12 atomes de carbone avec des diamines biprimaires aliphatiques saturées ayant de 6 à 12 atomes de carbone ; les polyaminoacides obtenus soit par homopolycondensation directe d'acide s-aminoalcanoïque comportant une chaîne hydrocarbonée ayant de 4 à 12 atomes de carbone, soit par ouverture hydrolytique et polymérisation des lactames dérivés de ces acides ; les copolyamides obtenus à partir des monomères de départ des polyamides précités, le composant acide de ces copolyamides pouvant consister en outre en partie en acide téréphtalique et/ou en acide isophtalique ; et les mélanges de pareils polyamides.

A titre d'illustration des polyamides obtenus par polycondensation de diacides et de diamines, on citera par exemple : le nylon 6,6 (polymère d'hexaméthylènediamine et d'acide adipique), le nylon 6,9 (polymère d'hexaméthylènediamine et d'acide azélaïque), le nylon 6,10 (polymère d'hexaméthylènediamine et d'acide sébacique), le nylon 6,12 (polymère d'hexaméthylènediamine et d'acide dodécanedioïque).

A titre d'illustration des polyaminoacides qui peuvent convenir, on citera : le nylon 4 (polymère d'acide amino-4 butanoïque ou de y-butyrolactame), le nylon 5 (polymère d'acide amino-5 pentanoïque ou de t-amylolactame), le nylon 6 (polymère d'ε-caprolatame), le nylon 7 (polymère d'acide amino-7 heptanoïque), le nylon 8 (polymère de capryllactame), le nylon 9 (polymère d'acide amino-9 nonanoïque), le nylon 10 (polymère d'acide amino-10 décanoïque), le nylon 11 (polymère d'acide amino-11 undécanoïque), le nylon 12 (polymère d'acide amino-12 dodécanoïque ou de laurylactame).

A titre d'illustration des copolyamides, on citera par exemple : le nylon 6,6/6,10 (copolymère d'hexaméthylènediamine, d'acide adipique et d'acide sébacique), le nylon 6,6/6 (copolymère d'hexaméthylènediamine, d'acide adipique et de caprolactame).

Les polyamides à ignifuger préférés de la présente invention sont le nylon 6,6, le nylon 6,10, le nylon 6, le nylon 6,6/6,10 et le nylon 6,6/6.

L'expression "phosphore rouge" au sens de la présente invention désigne les diverses variétés allotropiques colorées du phosphore (phosphore rouge, violet ou noir) commercialisées sous l'appellation de phosphore rouge.

La quantité de phosphore rouge est généralement comprise entre 1 et 30 % en poids par rapport au poids du polyamide à ignifuger. De préférence cette quantité est comprise entre 2 et 15 % en poids. De manière plus préférentielle encore, cette quantité est comprise entre 4 et 10 %. D'une manière générale, il est souhaitable d'utiliser le phosphore rouge sous forme finement divisée, par exemple sous forme de particules de diamètre moyen n'excédant pas 200 µm et de préférence compris entre 1 et 100 µm.

Le phosphore rouge peut être utilisé soit tel quel ou sous forme de particules de phosphore rouge enrobées au moyen d'une pellicule de polymère. Parmi ces polymères, on peut citer notamment : les résines époxy (cf. brevet français n° 2.314.221), des polymères ayant des liaisons insaturées maléïques, fumariques ou allyliques (cf. brevet français n° 2.314.219), des polyesters saturés de point de fusion compris entre 50° et 90°C et de masse moléculaire inférieure à 10.000 (cf. brevet français n° 2.373.575), des polycondensats phénol-formaldéhyde thermoplastiques de type novolaque (cf. brevet français n° 2.344.615), des polycondensats phénolisobutyraldéhyde thermoplastiques (cf. demande de brevet européen n° 82.106329.4 publiée sous le n° 0.071.788) ; l'emploi des polycondensats phénol-formaldéhyde thermoplastiques constitue une mesure particulièrement préférée pour la mise en oeuvre de la présente invention. la quantité de polymère mise en oeuvre pour enrober le cas échéant les particules de phosphore peut varier entre de larges limites. Généralement cette quantité représente 5 à 50 % du poids total du mélange phosphore rouge/polymère enrobant. A noter que l'on peut utiliser sans inconvénient des quantités de polymère enrobant plus importantes allant jusqu'à représenter 90 % du poids total du mélange phosphore rouge/polymère enrobant.

Les composés de zinc sont ajoutés dans les composition de l'invention sous des formes variées, comme par exemple sous forme de poudre. Ils peuvent être également sous forme cristallisée ou sous forme anhydre ou amorphe. Avantageusement, les composés du zinc doivent être stables ou sensiblement stables à la température de mise en forme de la composition et aux températures normales d'utilisation de celles-ci. Les caractéristiqes de cette poudre ne sont pas critiques. Ainsi, la forme, la taille et les modes d'introduction et de mélange du composé de zinc dans la composition polyamide sont déterminés en fonction des critères habituels de réalisation d'une composition de polymère thermoplastique destinée à être conformée par tout procédé, par exemple par moulage, extrusion, injection. Ainsi, on préfère utiliser une poudre ou un matériau possédant une fine granulométrie, l'effet étant généralement meilleur quand la granulométrie de la poudre est plus fine.

Les procédés convenables de préparation de ces compositions sont ceux classiquement utilisés dans la fabrication des compositions à base de polyamide.

Ainsi, les compositions conformes à la présente invention peuvent être préparées par simple mélange des divers constituants de toutes les manières appropriées permettant d'obtenir une composition homogène. De manière préférentielle, on réalise le mélange des divers constituants sous forme de poudre ou de granulés en opérant d'abord à froid un pré-mélange dans un mélangeur classique, puis en homogénéisant ensuite l'ensemble par un malaxage à chaud dans une extrudeuse à une ou plusieurs vis en opérant de préférence l'extrusion sous atmosphère inerte comme par exemple de l'azote ou de l'argon. A l'issue de ce traitement on obtient des joncs qui sont refroidis à l'eau puis découpés en granulés, ces derniers pouvant éventuellement être soumis ensuite à un séchage. Les compositions selon l'invention peuvent être préparées encore en confectionnant un mélange-maître, présenté sous forme de granulés à base d'une partie du polyamide à ignifuger, de phosphore rouge, des composés du zinc qui seront mélangés ensuite, avant mise en oeuvre, avec des granulés du reste du polyamide à ignifuger.

Ces compositions ont été définies ci-dessus par leurs constituants essentiels. Il va sans dire que l'on ne sortirait pas du cadre de l'invention en modifiant ces compositions de la manière indiquée.

A titre d'exemples, les compositions selon l'invention, quand elles sont destinées à l'obtention d'objets conformés, peuvent renfermer divers additifs : elles peuvent ainsi contenir comme décrit précédemment des charges renforçantes ou gélifiantes telles que des fibres de verre ou d'amiante, des microbilles de verre, du kaolin, de la silice, des micas, des bentonites, des bentones ou des mélanges de ces espèces. Parmi les charges précitées, les plus couramment utilisées sont les fibres de verre ; ces fibres ont en général un diamètre moyen compris entre 1 et 15 bm et une longueur comprise entre 2 et 8 mm. Il est avantageux, pour obtenir des articles doués de propriétés mécaniques optimales, d'utiliser des fibres ensimées, par exemple au moyen de résines époxy, de résines polyesters, de résines polyuréthannes ou de résines vinyliques, ces résines étant généralement associées à des agents de pontage du type aminosilane. Les proportions de charges peuvent varier entre par exemple 10 % et 60 % en poids par rapport au poids du polyamide de la composition.

On peut également faire appel à d'autres additifs tels que des lubrifiants, des stabilisants, des agents renforçateurs de chocs, des pigments ou colorants, des agents antistatiques, des agents de cristallisation, des agents stabilisant le phosphore rouge : ces additifs ainsi que leur emploi sont largement décrits dans la littérature.

Les compositions conformes à l'invention peuvent être transformées en articles finis ou semi-finis par application des techniques habituelles d'injection ou d'extrusion, par exemple.

Les compositions de l'invention présentent les avantages des compositions ignifugés au phosphore rouge, à savoir une résistance au feu et une combustibilité selon le test des "Underwriters Laboratories" UL 94 vertical (pour des éprouvettes d'une épaisseur de 1,6 mm) se situant dans la zone de classement VO à V1. Cette propriété est même améliorée par rapport aux compositions sans composés de zinc.

Toutefois, la présence des composés de zinc améliore la résistance au cheminement de l'arc électrique (propriété appelée IRC). Cette résistance peut être supérieure à 600 volts dans le cas des compositions chargées avec au moins 25 % en poids de fibre de verre.

Par ailleurs, les compositions de l'invention présente une agressivité beaucoup plus faible vis-à-vis des matériaux métalliques tels que le cuivre, que celle des compositions sans composés du zinc. Ces améliorations sont observées à un degré élevé quand la composition contient un colorant noir. Le caractère agressif des compositions est illustré par le test suivant :
150 g de compound, sous forme de granulés, contenant la composition à tester sont ajoutés dans un récipient étanche.

Des éprouvettes métalliques, en cuivre, laiton, argent et bronze sont suspendues dans le récipient au-dessus du compound.

L'ensemble est porté à 125°C pendant 336 heures.

La détermination du degré de corrosion est réalisée par détermination de la variation (généralement augmentation) du poids des éprouvettes.

La détermination des autres propriétés est effectuée selon les méthodes ci-dessous :
- Résistance à la propagation de l'arc (IRC) en volts :
   méthode appelée "Technique KC" décrit dans la norme DIN 53480/1972.
- Comportement à la combustion (UL 94) :
   méthode de mesure de la combustion verticale de la norme UL 94 avec des éprouvettes d'épaisseur 1,6 mm qui sont évaluées :
   - après conditionnement pendant 48 heures dans une humidité relative de 50 % et,
   - après conditionnement pendant une semaine à 70°C
- Migration :
   Des plaques de compound de dimension 100 mm 100 mm et d'épaisseur 3,2 mm sont disposées dans une enceinte contenant une solution d'acide sulfurique pour obtenir un degré d'humidité de 93 %.
   Les plaques sont soumises à 17 cycles de 24 heures comprenant 8 heures à 70°C et 16 h à 23°C.
   Chaque plaque est ensuite lavée avec 400 ml d'eau pendant 4 heures à 40°C. On mesure la conductivité de l'eau de lavage.
- Choc Charpy : mesure selon la norme ISO 179

Les compositions ignifugées selon la présente invention conviennent particulièrement bien pour l'obtention d'articles conformés utilisables dans les industries de l'électricité (par exemple industries électrique et électronique, électroménager, radio, automobile). Les caractéristiques de ces compositions permettent également de confectionner des articles par filage et filmage.

L'invention sera illustrée avec les exemples ci-dessous donnés uniquement à titre d'exemple non limitatif.

Les compositions de l'invention sont obtenues par mélange dans une extrudeuse type ZSK 40 de la Société WERNER PFLEIDERER des constituants de la composition, les fibres de verre étant alimentées par une double vis d'alimentation ZSB de WERNER.

L'extrudeuse comprend une vis tournant à une vitesse de 250 tours par minute à une température de 280°C et avec un débit de 70 kg/h. La pression de dégazage est de 56 x 10²Pa.

Les matières premières utilisées sont
- nylon 6,6 (polymère d'hexaméthylènediamine et d'acide adipique) : il s'agit d'un produit présentant un indice de viscosité de 133 ml/g (déterminé selon la norme ISO R 307, édition de 1977, sur la partie soluble dans l'acide formique à 90 %) ;
- des fibres de verre R 23 Dx1 commercialisées par la Société Owens Corning Fiberglass, elles sont présentes à une concentration de 25 % en poids,
- un lubrifiant : du stéarate d'aluminium selon une concentration de 0,4 % en poids,
- un colorant commercialisé par la Société Williams sous le nom Nigrosine Oisol Black N à une concentration de 1,16 % en poids,
- un ignifugeant constitué par du Phosphore rouge commercialisé sous le nom CPC 400 par la Société Wilbright et Wilson,
- un composé de zinc choisi dans le groupe comprenant le borate de zinc, le sulfure de zinc et l'oxyde de zinc. Ces composés peuvent être soit anhydres soit sous forme cristallisée.

Les différentes compositions et leurs propriétés sont rassemblées dans le tableau 1 ci-après. Les concentrations sont exprimées en pourcentage en poids de composé par rapport à la masse de composition finale. L'oxyde de zinc est un oxyde anhydre, le borate de zinc est hydraté.

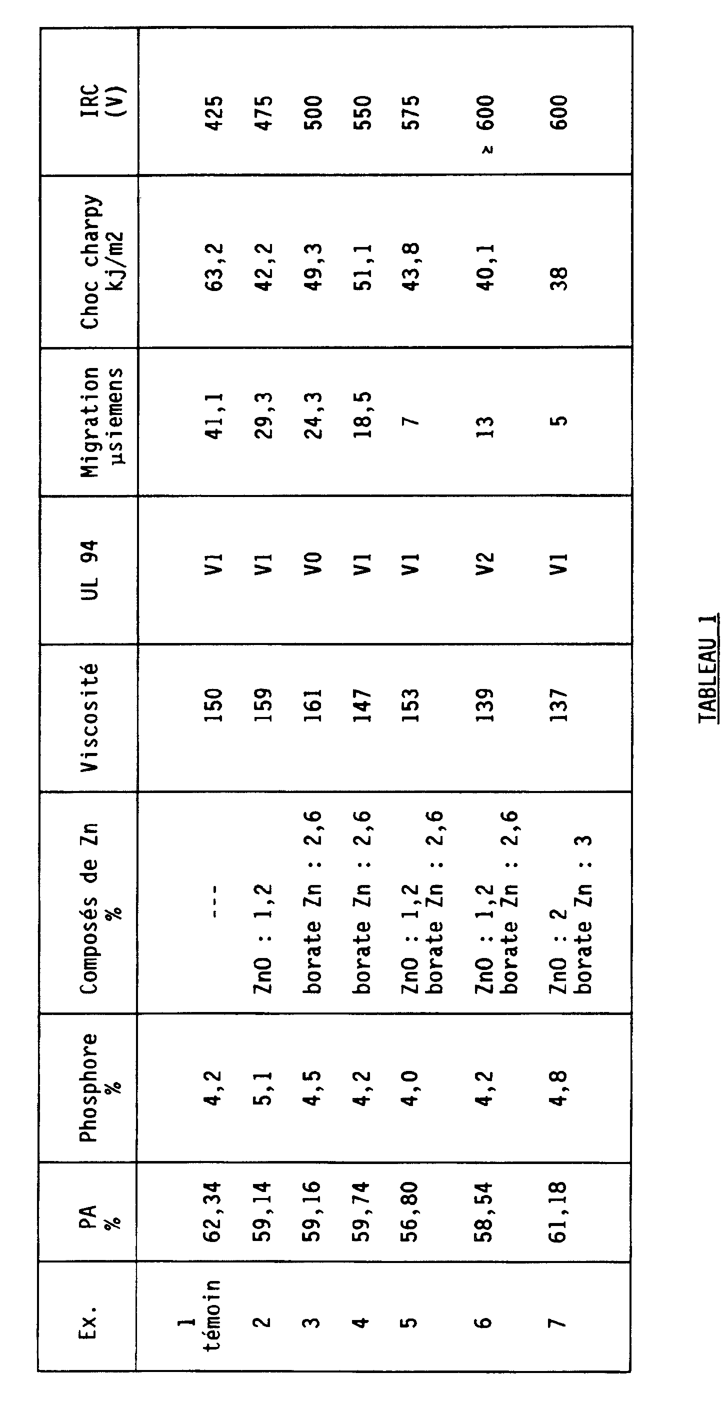

Une autre série de compositions a été réalisée en employant comme ignifugeant un phosphore rouge enrobé par une résine phénol-formaldéhyde. Cette composition contient 60 % en poids de phosphore rouge de granulométrie moyenne 20 à 30 µm enrobé par 40 % en poids du polycondensat phénol-formaldéhyde ayant un point de fusion de 80 °C et un poids moléculaire de 800. Les résultats obtenus sont rassemblés dans le tableau 2 ci-après.

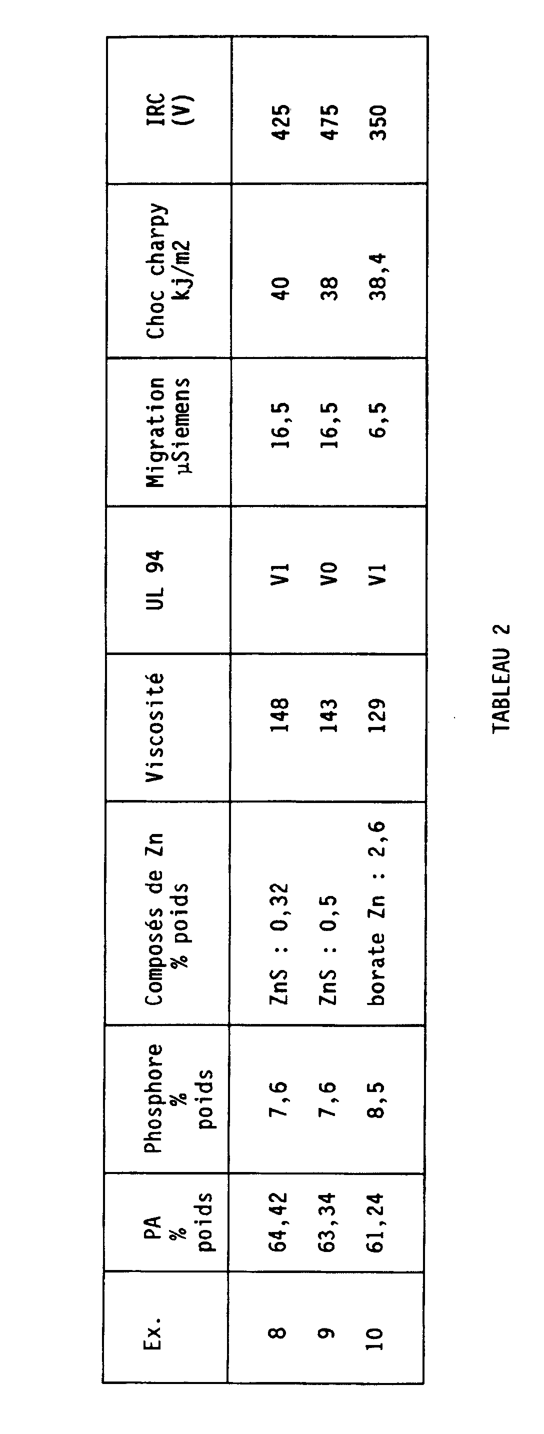

Les résultats du test de corrosion sont données ci-dessous (augmentation du poids des éprouvettes en mg) :

| Ex. | Eprouvettes | | | |
|---|---|---|---|---|
| | Cuivre | Laiton | Bronze | Argent |
| 1 | 5,3 | 1,3 | 10 | 2,2 |
| 2 | 6,5 | 2 | 12 | 1,1 |
| 3 | 4 | 0,6 | 2,7 | 0,1 |
| 4 | 1,5 | 0,6 | 1,5 | 0,4 |
| 5 | 4,6 | 0,6 | 1,3 | 0,1 |
| 6 | 2,3 | 0,2 | 10,5 | 0,2 |
| 7 | 1,1 | 0,4 | 1,1 | 0,1 |
| 8 | 18,2 | 15,4 | 12 | 2,5 |
| 9 | 14 | 4,3 | 14,7 | 2,2 |
| 10 | 8,3 | 0,8 | 4 | 0,2 |

Ces résultats montrent clairement l'effet de l'addition des composés de zinc sur l'agressivité des compositions polyamides vis-à-vis des métaux, ainsi que la diminution des phénomènes de migration.

## Revendications

1. Composition à base de polyamide contenant à titre d'ignifugeant du phosphore rouge, **caractérisée en ce qu'**elle comprend un oxyde de zinc et un sel de zinc choisi dans le groupe comprenant les sels oxygénés de zinc et les sulfures, et **en ce qu'**elle ne comprend pas de composés de lanthanides et de talc.

2. Composition à base de polyamide contenant à titre d'ignifugeant du phosphore rouge, **caractérisée en ce qu'**elle comprend du borate de zinc.

3. Composition selon la revendication 1 ou 2, **caractérisée en ce qu'**elle comprend comme additif un mélange borate de zinc, oxyde de zinc.

4. Composition selon l'une des revendications précédentes, **caractérisée en ce qu'**elle comprend de 10 % à 100 % de composés de zinc (exprimé en masse de métal) par rapport à la masse de phosphore rouge, de préférence entre 20 % et 80 %.

5. Composition selon la revendication 4, **caractérisée en ce qu'**elle comprend de 40 à 80 % en poids de composés de zinc (exprimé en masse de métal par rapport à la masse de phosphore rouge.

6. Composition selon l'une des revendications 3 à 5, **caractérisée en ce que** la concentration en borate de zinc est comprise entre 15 et 40 % et celle en oxyde de zinc entre 15 et 60 %, ces concentrations étant exprimées en masse de Zn par rapport au poids de phosphore rouge.

7. Composition selon l'une des revendications précédentes, **caractérisée en ce que** le phosphore rouge est enrobé dans une résine.

8. Composition selon l'une des revendications précédentes, **caractérisée en ce qu'**elle contient une charge minérale.

9. Composition selon la revendication 8, **caractérisée en ce que** la charge minérale est de la fibre de verre.

10. Composition selon l'une des revendications précédentes, **caractérisée en ce qu'**elle contient au moins un lubrifiant.

11. Article obtenu par moulage d'une composition selon l'une des revendications précédentes.

## Patentansprüche

1. Zusammensetzung auf der Basis von Polyamid, die als flammfestes Mittel roten Phosphor enthält, **dadurch gekennzeichnet, daß** sie ein Oxid von Zink und ein Salz von Zink umfaßt, gewählt aus der die Sauerstoffsalze von Zink und die Sulfide umfassenden Gruppe, und dadurch, daß sie keine Verbindungen der Lanthanide und Talk umfaßt.

2. Zusammensetzung auf der Basis von Polyamid, die als flammfestes Mittel roten Phosphor enthält, **dadurch gekennzeichnet, daß** sie Zinkborat umfaßt.

3. Zusammensetzung nach Anspruch 1 oder 2, **dadurch gekennzeichnet, daß** sie als Zusatzstoff eine Mischung Zinkborat/Zinkoxid umfaßt.

4. Zusammensetzung nach einem der vorstehenden Ansprüche, **dadurch gekennzeichnet, daß** sie 10 % bis 100 %, vorzugsweise zwischen 20 % und 80 % Zinkverbindungen (ausgedrückt in Masse Metall) umfaßt, bezogen auf die Masse des roten Phosphors.

5. Zusammensetzung nach Anspruch 4, **dadurch gekennzeichnet, daß** sie 40 Gew.-% bis 80 Gew.-% Zinkverbindungen (ausgedrückt in Masse Metall) umfaßt, bezogen auf die Masse des roten Phosphors.

6. Zusammensetzung nach einem der Ansprüche 3 bis 5, **dadurch gekennzeichnet, daß** die Konzentration an Zinkborat zwischen 15 % und 40 % beträgt und die an Zinkoxid zwischen 15 % und 60 %, wobei diese Konzentrationen in Masse Zink ausgedrückt sind, bezogen auf das Gewicht des roten Phosphors.

7. Zusammensetzung nach einem der vorstehenden Ansprüche, **dadurch gekennzeichnet, daß** der rote Phosphor mit einem Harz umhüllt ist.

8. Zusammensetzung nach einem der vorstehenden Ansprüche, **dadurch gekennzeichnet, daß** sie einen mineralischen Füllstoff enthält.

9. Zusammensetzung nach Anspruch 8, **dadurch gekennzeichnet, daß** der mineralische Füllstoff aus Glasfasern besteht.

10. Zusammensetzung nach einem der vorstehenden Ansprüche, **dadurch gekennzeichnet, daß** sie mindestens ein Gleitmittel enthält.

11. Artikel, erhalten durch Formgießen einer Zusammensetzung nach einem der vorstehenden Ansprüche.

## Claims

1. Composition based on polyamide and containing red phosphorus as a flame retardant, **characterized in that** it comprises a zinc oxide and a zinc salt chosen from the group comprising the oxygen-containing zinc salts and the sulphides, and **in that** it does not comprise any lanthanide compounds and talc.

2. Composition based on polyamide and containing red phosphorus as a flame retardant, **characterized in that** it comprises zinc borate.

3. Composition according to Claim 1 or 2, **characterized in that** it comprises, as additive, a mixture of zinc borate and zinc oxide.

4. Composition according to one of the preceding claims, **characterized in that** it comprises from 10% to 100% of zinc compounds (expressed as mass of metal) with respect to the mass of red phosphorus, preferably between 20% and 80%.

5. Composition according to Claim 4, **characterized in that** it comprises from 40 to 80% by weight of zinc compounds (expressed as mass of metal) with respect to the mass of red phosphorus.

6. Composition according to one of Claims 3 to 5, **characterized in that** the zinc borate concentration is between 15 and 40% and the zinc oxide concentration is between 15 and 60%, the said concentrations being expressed as mass of Zn with respect to the weight of red phosphorus.

7. Composition according to one of the preceding claims, **characterized in that** the red phosphorus is coated in a resin.

8. Composition according to one of the preceding claims, **characterized in that** it contains an inorganic filler.

9. Composition according to Claim 8, **characterized in that** the inorganic filler is glass fibre.

10. Composition according to one of the preceding claims, **characterized in that** it contains at least one lubricant.

11. Article obtained by moulding a composition according to one of the preceding claims.
